# EUROPEAN PATENT SPECIFICATION

(11) **EP 2 119 689 B1**
(45) Date of publication and mention of the grant of the patent: **23.05.2012**
(21) Application number: 08703375.9
(22) Date of filing: 17.01.2008
(51) Int. Cl.: C04B 35/565, F01N 3/28, C04B 35/80, F01N 3/022, C04B 37/00, C04B 38/00

(54) **METHOD OF PRODUCING HONEYCOMB SEGMENT BONDED ARTICLE**
VERFAHREN ZUR HERSTELLUNG EINES WABENSEGMENT-VERBUNDARTIKELS
PROCÉDÉ DE FABRICATION D'UN ARTICLE SOUS FORME DE SEGMENTS DE NIDS D'ABEILLE LIÉS ENTRE EUX

(30) Priority: 18.01.2007 JP 2007009571
(43) Date of publication of application: 18.11.2009
(73) Proprietor: NGK Insulators, Ltd., Nagoya-shi, Aichi 467-8530 (JP)
(72) Inventor: INOUE, Katsuhiro, Nagoya-shi Aichi 467-8530 (JP); KAWAI, Masaaki, Nagoya-shi Aichi 467-8530 (JP); HIRAMATSU, Takuya, Nagoya-shi Aichi 467-8530 (JP); KODAMA, Suguru, Nagoya-shi Aichi 467-8530 (JP)
(74) Representative: Paget, Hugh Charles Edward
(86) International application number: PCT/JP2008/050520
(87) International publication number: WO 2008/088011

(56) References cited:
- JP-A- 2003 275 522
- JP-A- 2004 262 670

## Description

### Technical Field

The present invention relates to a method of producing a honeycomb segment bonded article where a plurality of honeycomb segments are unitarily bonded by means of a bonding material layer.

### Background Art

A honeycomb structure is in heavy usage as a trapping filter for exhaust gas for environmental improvement, pollution prevention, and the like. At present, for example, an SiC DPF (diesel particulate filter) is produced by unitarily bonding a divided substrate (honeycomb segments) by means of a bonding material (ceramic cement) in order to inhibit a breakage due to a thermal shock (see, e.g., Patent Document 1). However, it has a problem of causing a breakage in a spot having low properties upon a heat resistant test because there is caused a difference in a texture of the bonding material layer after drying to generate a variance in properties.

Patent Document 1: JP-A-2003-10616

It is generally ideal that the bonding material is equally dried in all bonded spots in the bonded article. However, in a general production method, in the case of the bonded article obtained by bonding 12 pieces or more of the substrate (honeycomb segments), the bonding material on the outside is dried earlier to be solidified, before the bonding material on the inside is dried. Therefore, the drying manner is different between the bonding material on the outside and the bonding material on the inside, and the behavior of drying shrinkage and hardening of the bonding material according to the drying manner differs. Since, in the bonding material on the outside, which is dried and solidified first, the substrate is solidified with moving relatively uniformly according to the drying shrinkage and hardening of the bonding material, a variance in a texture of the bonding material layer is small, and the property variance is small. In contrast, since, in the bonding material on the inside, movement of the honeycomb segments according to the drying shrinkage and the hardening of the bonding material is not uniform, there arise a variance in the formation manner and a variance also in properties.

For example, a honeycomb segment hardens with moving in the direction where the bonding gap becomes small according to the shrinkage of the bonding material in a certain spot, while a honeycomb segment hardens without moving enough to match the shrinkage of the bonding material because one side of the honeycomb segment is already hardened in another spot. Alternatively, a honeycomb segment moves in the direction where the bonding gap is increased on the contrary to cause a variance in a texture of the bonding material layer, which leads to a variance in properties. Use of a bonding layer containing no inorganic fibers has been increasing from the viewpoint of health problems and the like. However, particularly, in the case of bonding with a bonding material, a variance in a texture of the bonding material layer is easily caused, and a variance in properties thereof is easily caused. Therefore, the thermal shock property deteriorates. In addition, in the case of producing a large-sized honeycomb structure, the drying manner is different between the bonding material on the outside and the bonding material on the inside of the bonded article. Therefore, since a variance in a texture of the bonding material layer is easily caused, and a variance in properties is easily caused, there is the case that the thermal shock property deteriorates.

The present invention aims to provide a method of producing a honeycomb segment bonded article, the method inhibiting decrease in strength properties due to a variance in a texture of the bonding material layer among a plurality of honeycomb segments unitarily bonded together by means of the bonding material layer formed of the bonding material.
JP 2003 275522 describes a ceramic filter assembly comprising filter core members and low-thermal conductivity members. The filter core members are formed by bonding the outer peripheral surfaces of a plurality of prismatic honeycomb filters to each other across ceramic sealing material layers. The prismatic honeycomb filters consist of porous ceramic bodies of a non-oxide system essentially consisting of silicon carbide. The low-thermal conductivity members consist of ceramic materials having a lower thermal conductivity than the thermal conductivity of the porous ceramic bodies forming the filter core members. The low-thermal conductivity members are bonded across ceramic sealing material layers on the outer peripheral surfaces of the filter core members in the state of being arranged on the outer sides of the filter core members. ,

### Disclosure of the Invention

The present inventors have found out that the above problem can be solved by unitarily bonding preliminary blocks together after producing the preliminary block by bonding honeycomb segments. That is, according to the present invention, the following method of producing a honeycomb segment bonded article is provided.

[1] A method of producing a honeycomb segment bonded article, the method comprising:
(A) producing plural preliminary blocks by unitarily bonding a plurality of honey-comb segments having a plurality of cells being partitioned by partition walls and passing through in the axial direction with a bonding material at a bonding face of each of the honeycomb segments and drying the honeycomb segments, and
(B) integrally bonding said plural preliminary blocks together.

[2] The method of producing a honeycomb segment bonded article according to the above [1], wherein, in a preliminary block formed in step (A), the honeycomb segments are arranged in 5 rows or less along each of a first side and a second side perpendicular to the first side in a cross section in an axial direction to form an arrangement of 5 rows or less times 5 rows or less.

[3] The method of producing a honeycomb segment bonded article according to the above [1] or [2], wherein, in a preliminary block formed in step (A), no or one honeycomb segment is surrounded by the bonding layer formed of the bonding material at all outer peripheral walls.

[4] The method of producing a honeycomb segment bonded article according to any one of the above [1] to [3], wherein, in a preliminary block formed in step (A), the honeycomb segments are arranged in 2 rows or less on the first side and 2 rows or more on the second side perpendicular to the first side in a cross section in the axial direction.

[5] The method of producing a honeycomb segment bonded article according to any one of the above [1] to [3], wherein, in a preliminary block formed in step (A), the honeycomb segments are arranged in 3 rows on the first side and 3 rows on the second side perpendicular to the first side in a cross section in the axial direction to form an arrangement of 3 rows times 3 rows.

[6] The method of producing a honeycomb segment bonded article according to any one of the above [1] to [5], including the further step, after step (B), of drying the bonded article prepared in step (B) and thereafter either bonding thereto a further preliminary block prepared in accordance with step (A) or bonding thereto a honeycomb segment.

[7] The method of producing a honeycomb segment bonded article according to any one of the above [1] to [6], wherein, in the honeycomb segment bonded article, the same number of the honeycomb segments are arranged on the first side and the second side perpendicular to the first side in a cross section in the axial direction.
[8] The method of producing a honeycomb segment bonded article according to any one of the above [1] to [7], wherein the method comprises integrally bonding honeycomb segments of one layer on part of the outer peripheral face of the preliminary block.
[9] The method of producing a honeycomb segment bonded article according to any one of the above [1] to [7], wherein the method comprises integrally bonding honeycomb segments of one layer on the outer peripheral face of the preliminary block more than once.

After drying and solidifying at least one preliminary block bonded article previously produced before the whole is integrated, the preliminary blocks are bonded together, and they are dried for integration. This enables to obtain a structure capable of equally moving the honeycomb segments or the preliminary blocks in accordance with drying shrinkage and hardening of the bonding material, reducing a variance (unevenness) in the manner of formation of the bonding material layer, and reducing a variance in properties.

### Brief Description of the Drawings

[Fig. 1] Fig. 1 is a flowchart showing a production process of a honeycomb segment bonded article, where a production method of the present invention is applied.
[Fig. 2] Fig. 2 is a perspective view showing a honeycomb segment.
[Fig. 3] Fig. 3 is an explanatory view showing a bonding method of honeycomb segments.
[Fig. 4] Fig. 4 is a view showing the reference bonding method 2.
[Fig. 5] Fig. 5 is a view showing the bonding method 3.
[Fig. 6] Fig. 6 is a view showing the reference bonding method 4.
[Fig. 7] Fig. 7 is a view showing the bonding method 5.
[Fig. 8] Fig. 8 is a view showing the reference bonding method 6.
[Fig. 9] Fig. 9 is a view showing the bonding method 7.
[Fig. 10] Fig. 10 is a view showing the bonding method 8.
[Fig. 11] Fig. 11 is a view showing the bonding method 9.
[Fig. 12] Fig. 12 is a view showing the bonding method 10.
[Fig. 13] Fig. 13 is a view showing the reference bonding method 11.
[Fig. 14] Fig. 14 is a view showing the bonding method 12.
[Fig. 15] Fig. 15 is a view showing the bonding method 13.
[Fig. 16] Fig. 16 is a view showing the bonding method 14.
[Fig. 17] Fig. 17 is a view showing the bonding method 15.
[Fig. 18] Fig. 18 is a view showing the bonding method 16.
[Fig. 19] Fig. 19 is a view showing the bonding method 17.
[Fig. 20] Fig. 20 is a view showing the bonding method 18.
[Fig. 21] Fig. 21 is a view showing the bonding method 19.
[Fig. 22] Fig. 22 is a view explaining a problem caused by a conventional bonding method.
[Fig. 23] Fig. 23 is an explanatory view explaining a bending test of the bonded portion.

### Description of Reference Numerals

1: honeycomb segment bonded article, 2: partition wall, 3: cell, 5: bonding material layer, 7: outer peripheral wall, 8: end face, 10: honeycomb segment, 11: test piece, 13: small block, 14: medium-sized block, 20: vertical backing plate, 21: horizontal backing plate

### Best Mode for Carrying out the Invention

Hereinbelow, an embodiment of the present invention will be described with referring to drawings. The present invention is by no means limited to the following embodiment, and changes, modifications, and improvements may be made as long as they do not deviate from the scope of the invention.

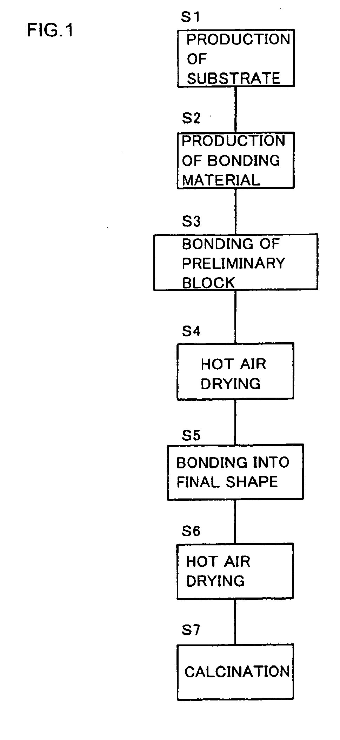

Fig. 1 shows a production process of a honeycomb segment bonded article 1, where a production method of the present invention is applied. In the first place, pieces of the substrate (honeycomb segments 10) are produced (S1). Next, a bonding material is produced (S2). Then, the pieces of the substrate are bonded with the bonding material to produce a small block 13 (S3) as a preliminary block, and the bonded article is subjected to hot air drying (S4). As the preliminary block, a medium-sized block 14 may be produced instead of the small block 13. Incidentally, in the present specification, preliminary blocks where honeycomb segments 10 are arranged in 2 × 2 rows, 2 × 3 rows, 3 × 3 rows, 1 × 4 rows, 2 × 4 rows, or the like are called small blocks. Each small block has no or one honeycomb segment surrounded by the bonding material layer formed of a bonding material at all the outer peripheral walls, and the ratio of minimum value / maximum value of bending strength (bending strength ratio) is nearly 1 with a small variance in bending strength of the bonding material layer. In addition, preliminary blocks where honeycomb segments are arranged in 4 × 4 rows, 5 × 5 rows, or the like and which are larger than the small blocks are called medium-sized blocks. The medium-sized block can suppress a variance in comparison with the case of not forming any preliminary block though a variance in bending strength of the bonding material layer increases in comparison with the small block. The drying steps can be reduced in comparison with the case of repeating bonding and drying steps plural times using a small block, and, therefore, a bonded article can be produced at low cost by reducing drying steps. That is, in the preliminary block, arrangement of preferably 5 rows or less × 5 rows or less, more preferably 3 rows or less × 3 rows or less in order to reduce a variance in bending strength. On the other hand, in the case of producing a large honeycomb segment bonded article 1, a medium-sized block having 4 rows × 4 rows, 5 rows × 5 rows, or the like can be used.

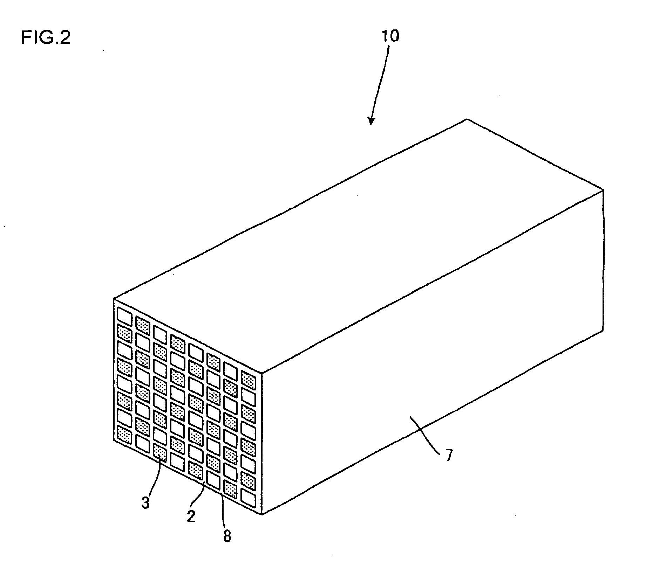

After hot air drying (S4), small blocks 13 are integrally bonded together or honeycomb segments 10 of one layer are integrally bonded to an outer peripheral face of the small block 13 to obtain a honeycomb segment bonded article 1 (S5). In addition, a plurality of small blocks or medium-sized blocks may unitarily be bonded together, or honeycomb segments of one layer may unitarily be bonded to the outer peripheral face of a small block or a medium-sized block to form a preliminary block. Incidentally, in the case of producing a larger honeycomb segment bonded article 1, a small block 13, a medium-sized block 14, or a honeycomb segment 10 is further bonded to form a final shape. That is, a preliminary block having 5 rows or less × 5 rows or less is produced, and a honeycomb segment bonded article 1 is obtained using the preliminary block. Then, after the honeycomb segment bonded article 1 having the final shape is subjected to hot air drying (S6), calcination (S7) is performed. In the case that the bonding material is protruded upon production of the small block or the medium-sized block, it is preferable to apply a masking tape on the outer peripheral face of the honeycomb segment to inhibit adherence of the bonding material or to scrape the bonding material. In addition, it is preferable to perform hot air drying after leaving to stand at room temperature for a certain period of time before hot air drying after bonding to the small block or the medium-sized block, or after bonding into the final shape. Each of the production steps will be described with referring to Figs. 2 to 21.

Fig. 2 shows a honeycomb segment 10 which is a substrate produced in S1 of Fig. 1, where a honeycomb segment bonded article 1 of the present invention is applied. The honeycomb segment 10 is formed of ceramic and has an outer peripheral wall 7, partition walls 2 disposed inside the outer peripheral wall 7, and a plurality of cells 3 partitioned by the partition walls 2.

Further, in the case of using a honeycomb segment bonded article 1 of the present invention as a filter, it is preferable that a part of cells 3 are plugged at the end faces 8 of the honeycomb segment 10. In particular, it is preferable that adjacent cells 3 are alternately plugged in the mutually opposite end faces 8 in such a manner that the end faces 8 are plugged in a checkerwise pattern. By such plugging, for example, a fluid to be treated flowing into the segment from one end face 8 passes through the partition walls 2, and flows out from the other end face 8. When the fluid to be treated passes through the partition walls 2, the partition walls 2 function as a filter, and target substances can be removed.

In the present invention, it is preferable that the honeycomb segment 10 is made of at least one kind selected from the group consisting of cordierite, mullite, alumina, aluminum titanate, lithium aluminum silicate, silicon carbide, silicon nitride, and silicon carbide-metal silicon composite phase from the viewpoint of strength, heat resistance, and the like. However, in the case of using a honeycomb segment bonded article 1 of the present invention for a DPF, silicon carbide or silicon-silicon carbide based composite phase is preferably used from the viewpoint of high thermal resistance. In addition, cordierite is preferably used from the viewpoint of low thermal expansion coefficient and good thermal shock resistance. In addition, in the present invention, in the case that the honeycomb segment bonded article 1 is made from metal silicon (Si) and silicon carbide (SiC), when the Si content defined by Si/(Si+SiC) of the honeycomb segment bonded article 1 is too small, strength is low because an effect of adding Si cannot be obtained. When the content is above 50 mass%, effects in thermal resistance and high thermal conductivity, which are the characteristics of SiC, cannot be obtained. The Si content is preferably 5 to 50 mass%, more preferably 10 to 40 mass%.

To the above raw material are added a binder such as methyl cellulose and hydroxypropoxylmethyl cellulose, an organic pore former, a surfactant, and water to prepare kneaded clay having plasticity, and the kneaded clay is subjected to, for example, extrusion forming to form a quadrangular prism honeycomb formed article having a large number of cells 3 partitioned by partition walls 2 and extending through in the axial direction. After the honeycomb formed article is subjected to drying by, for example, microwaves and hot air, it is calcined to remove the binder and the organic pore former and then fired to produce the honeycomb segment 10.

In addition, it is preferable that the plugging portions in the case that the cells 3 are plugged in the end faces 8 contain as the main crystal phase at least one kind of a crystal phase selected from the aforementioned substances mentioned as suitable substances for the main crystal phase of the partition walls 2, and it is further preferable that a crystal phase similar to the main crystal phase of the honeycomb segment bonded article 1 is contained as the main crystal phase.

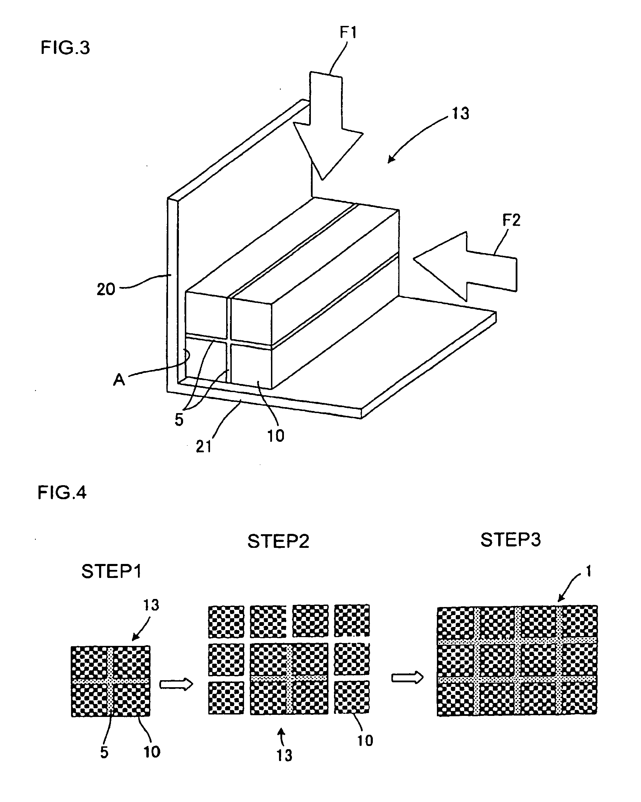

Fig. 3 shows a method of bonding the honeycomb segment bonded article 1. In the first place, a plurality of ceramic porous honeycomb segments 10 having a large number of cells 3 partitioned by the partition walls 2 and extending through in the axial direction are bonded by means of the bonding material layer 5 to form a small block 13 as a preliminary block (Fig. 1: S3).

Specifically, as shown in Fig. 3, the honeycomb segments 10 are piled up by means of the bonding material layer 5 between the bonding faces, which are outer peripheral walls 7 of the segments, in the receiving area A formed in a L-shaped cross section by the vertical backing plate 20 and the horizontal backing plate 21. The segments 10 are piled up in such a manner that two faces of each segment are along the vertical backing plate 20 and the horizontal backing plate 21. As shown in Fig. 3, for example, four honeycomb segments 10 are bonded to form the small block 13.

The bonding material of the bonding material layer 5 produced in S2 of Fig. 1 contains inorganic particles and an inorganic adhesive as the main components and an organic binder, a surfactant, a resin balloon, water, and the like as accessory components. As the inorganic particles, plate-shaped particles, sphere particles, aggregated particles, fibrous particles, needle shaped particles, or the like may be used. As the inorganic adhesive, colloidal silica (silica sol), colloidal alumina (alumina sol), various kinds of oxide sols, ethyl silicate, liquid glass, silica polymer, aluminum phosphate, or the like may be used. It is preferable that the main component contains ceramic particles in common with the constituent of the honeycomb segment 10 and that the main component does not contain fibrous particles such as a ceramic fiber from the viewpoint of health and the like and contains plate-shaped particles. As the plate-shaped particles, for example, mica, talk, boron nitride, glass flakes or the like may be used. By applying the bonding material to a bonding face of the honeycomb segment 10, a bonding material layer 5 can be formed. The bonding material layer 5 may be formed to the honeycomb segment 10 before piling up or to an exposed bonding face of the honeycomb segment 10 already piled up. The honeycomb segments 10 are piled up one by one.

Next, as shown in Fig. 3, after the predetermined number (four of 2 rows × 2 rows in the present embodiment) of the honeycomb segments 10 are piled up, the whole honeycomb segments 10 are subjected to main pressurizing by means of the honeycomb segments 10 located in the outermost peripheral layer in the directions of the arrow F1 and the arrow F2. At this time, since two faces of the layered article are covered with the vertical backing plate 20 and the horizontal backing plate 21, the whole of the other two faces is simultaneously subjected to main pressurizing in the arrows F1 and F2 directions. As a pressurizing force at this time, an air cylinder, an oil hydraulic cylinder, or the like may be used.

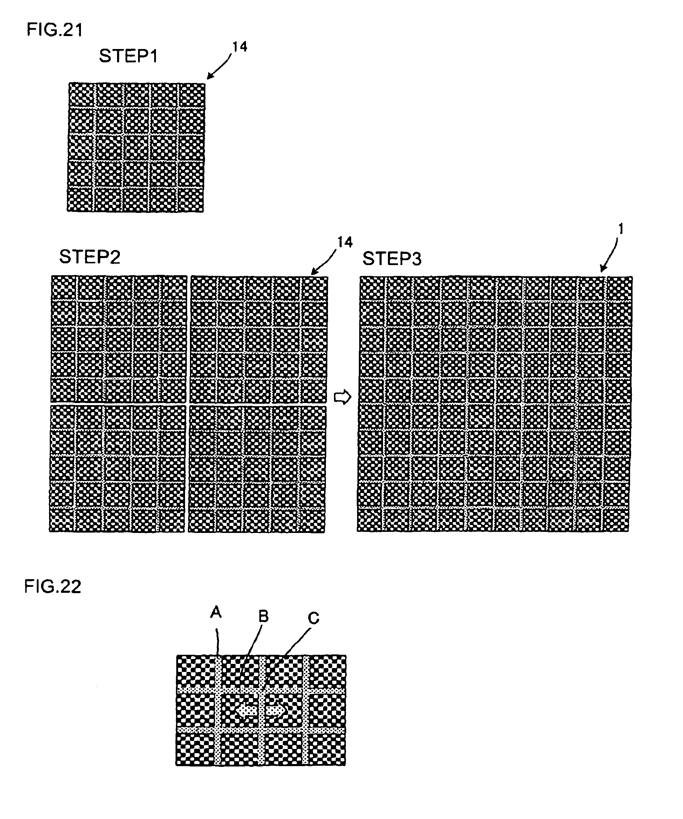

As described above, four honeycomb segments 10 of 2 rows × 2 rows are bonded together by means of the bonding material layer 5 to form the small block 13. After the small block 13 is subjected to hot air drying (Fig. 1: S4), the honeycomb segments 10 of one layer are disposed on the outer peripheral faces of the three directions of the small blocks 13 as shown in the step 2 of Fig. 4 to form a honeycomb segment bonded article 1 where 12 honeycomb segments of 3 rows × 4 rows as shown in the step 3 of Fig. 4. According to a conventional method, in the case that there are two or more honeycomb segments 10 whose whole outer peripheral faces 5 are surrounded by the bonding material layer 5, there arises a variance in bonding strength in the position surrounded by four honeycomb segments 10 in a cross-section of the bonding material layer 5, for example, the position C in Fig. 22 upon drying to cause deterioration in strength of the honeycomb segment bonded article 1. As described herein, by bonding, leaving at room temperature, and hot air-drying the honeycomb segments 10 to form the small block 13 in advance as a preliminary block, a variance in properties in bonded points can be reduced, and thermal shock resistance of the honeycomb segment bonded article 1 can be improved due to improvement in properties of the bonded portions.

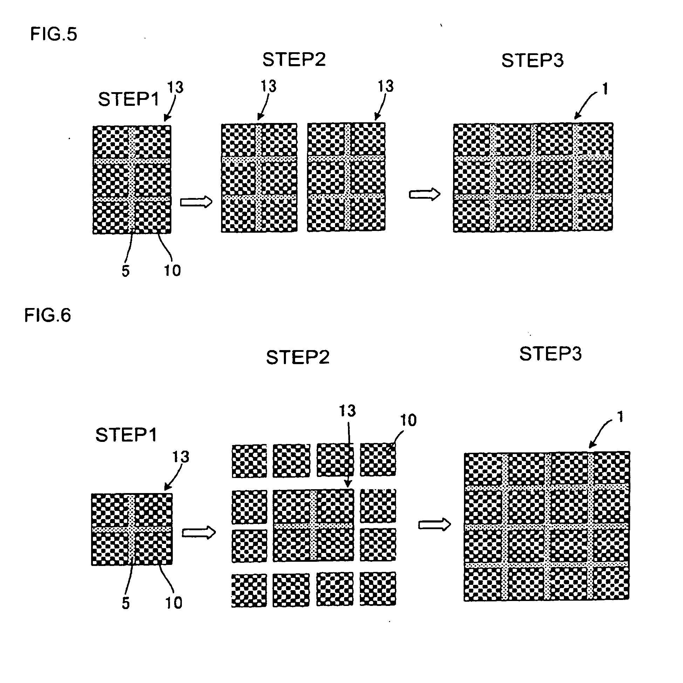

As shown in the step 1 of Fig. 5, there may be produced a small block 13 where two rows of honeycomb segments 10 are arranged on the first side (horizontal direction in the figure) and three rows of honeycomb segments 10 are arranged on the second side (vertical direction in the figure) in a cross section in the axial direction. The small block 13 in the step 1 of Fig. 5 has a structure where no honeycomb segment 10 is surrounded by the bonding material layer 5 formed by the bonding material at all the outer peripheral walls. After the small block 13 is subjected to hot air drying (Fig. 1: S4), as shown in the step 2 of Fig. 5, two small blocks 13 are disposed and bonded together to form a honeycomb segment bonded article 1 where 12 honeycomb segments 10 of 3 rows × 4 rows as shown in the step 3 of Fig. 5 are bonded (Fig. 1: S5).

Further, as shown in the step 1 of Fig. 6, after four honeycomb segments 10 of 2 rows × 2 rows are bonded and subjected to hot air drying (Fig. 1: S4), honeycomb segments 10 of one layer are disposed on the whole outer peripheral faces of the small block 13 as shown in the step 2 of Fig. 6, and the honeycomb segments 10 are bonded to form a honeycomb segment bonded article 1 where 16 honeycomb segments 10 of 4 rows × 4 rows are bonded together as shown in the step 3 of Fig. 6.

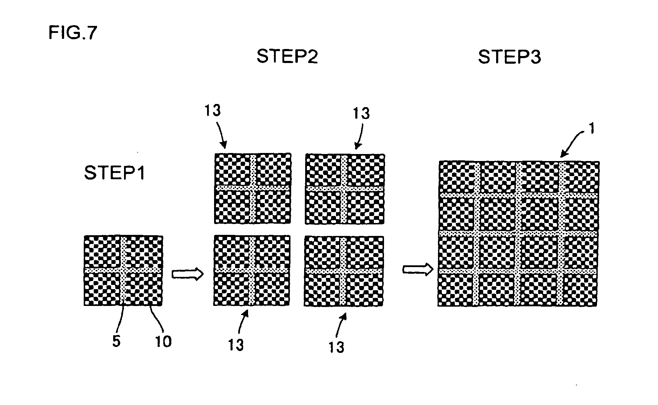

As shown in the step 1 of Fig. 7, four honeycomb segments 10 of 2 rows × 2 rows are bonded together and subjected to hot air drying (Fig. 1: S4) to form hour small blocks 13. The four small blocks 13 are disposed as shown in the step 2 of Fig. 6 and bonded together to form a honeycomb segment bonded article 1 where 16 honeycomb segments of 4 rows × 4 rows are bonded as shown in the step 3 of Fig. 6.

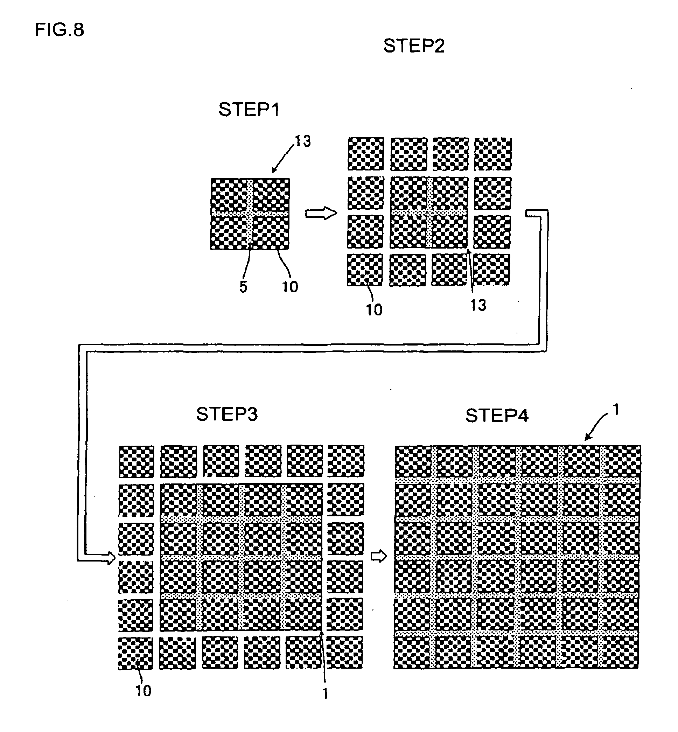

In addition, as shown in the step 1 of Fig. 8, after four honeycomb segments 10 of 2 rows × 2 rows are bonded and subjected to hot air drying (Fig. 1: S4), as shown in the step 2 of Fig. 8, honeycomb segments 10 of one layer are disposed on the whole outer peripheral faces of the small block 13 and bonded together to form a honeycomb segment bonded article 1 where 16 honeycomb segments 10 of 4 rows × 4 rows are bonded together, and the honeycomb segment bonded article 1 is dried. Further, as shown in the step 3 of Fig. 8, honeycomb segments 10 of one layer are disposed on the outer peripheral faces on the honeycomb segment bonded article 1 and bonded together to form a honeycomb segment bonded article 1 having a final shape shown in the step 4. That is, the honeycomb segment bonded article 1 of 4 rows × 4 rows formed in the step 2 of Fig. 8 serves as a preliminary block of the honeycomb segment bonded article 1 of 6 rows × 6 rows shown in the step 4 of Fig. 8. Thus, after producing a small block 13, honeycomb segments 10 of one layer are bonded and dried, and honeycomb segments 10 of one layer are further bonded. This can inhibit unevenness of the bonding material layer 5 according to drying of the bonding material and enables to produces a honeycomb segment bonded article 1 excellent in thermal resistance.

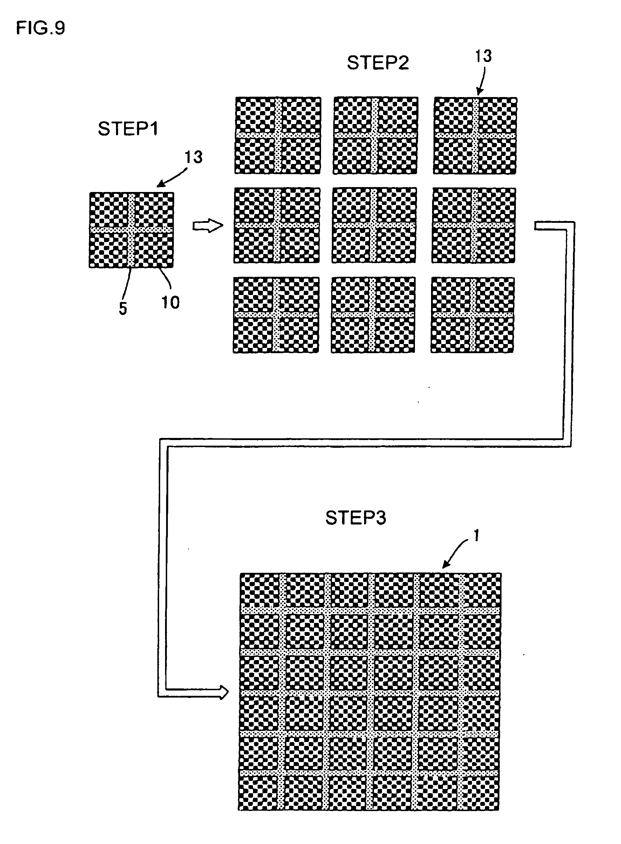

As shown in the step 1 of Fig. 9, four honeycomb segments 10 of 2 rows × 2 rows are bonded and subjected to hot air drying (Fig. 1: S4) to form nine small blocks 13, and the nine small blocks 13 are disposed as shown in the step 2 of Fig. 9 and bonded together to form a honeycomb segment bonded article 1 where 36 honeycomb segments 10 of 6 rows × 6 rows are bonded as shown in the step 3 of Fig. 9. As shown in the step 2 of Fig. 9, since only one small block 13 is surrounded by the bonding material layer 5 at all the outer peripheral faces, unevenness of the bonding material layer 5 can be inhibit, and a honeycomb segment bonded article 1 excellent in thermal resistance can be produced.

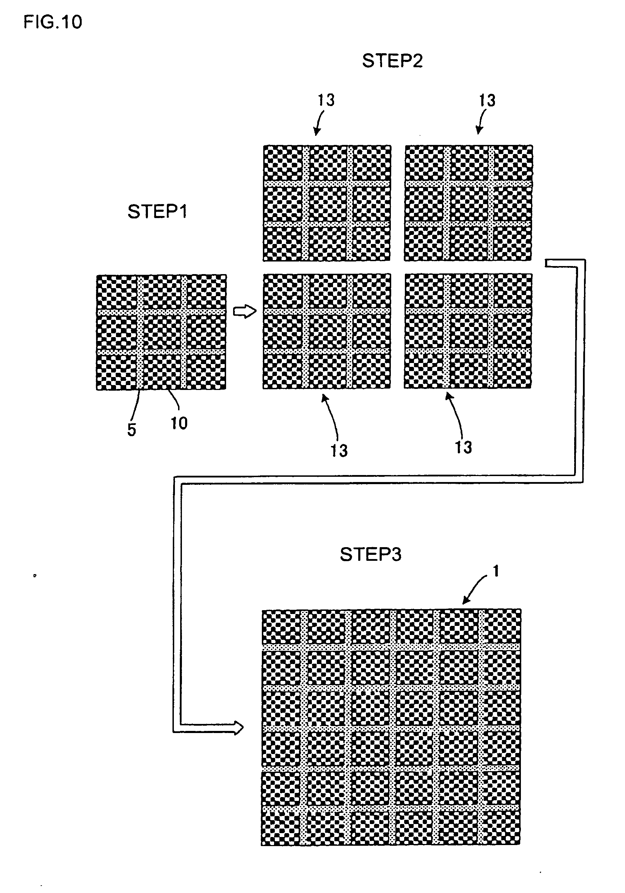

As shown in the step 1 of Fig. 10, honeycomb segments 10 arranged in 3 rows × 3 rows, where 3 rows are arranged on each of the first side and the second side perpendicular to the first side in a cross section in the axial direction, are bonded and subjected to hot air drying (Fig. 1 : S4) to produce a small block 13. As shown in the step 2 of Fig. 10, four small blocks 13 are disposed and bonded together to produce a honeycomb segment bonded article 1 of 6 rows × 6 rows as shown in the step 3 of Fig. 10. That is, as shown in the step 1 of Fig. 10, as long as only one or less honeycomb segment 10 is surrounded by the bonding material layer 5 formed by the bonding material at the whole outer peripheral walls in each small block 13, unevenness of the bonding material layer 5 is inhibited to improve thermal shock resistance of the honeycomb segment bonded article 1 due to improvement in properties in bonding portions.

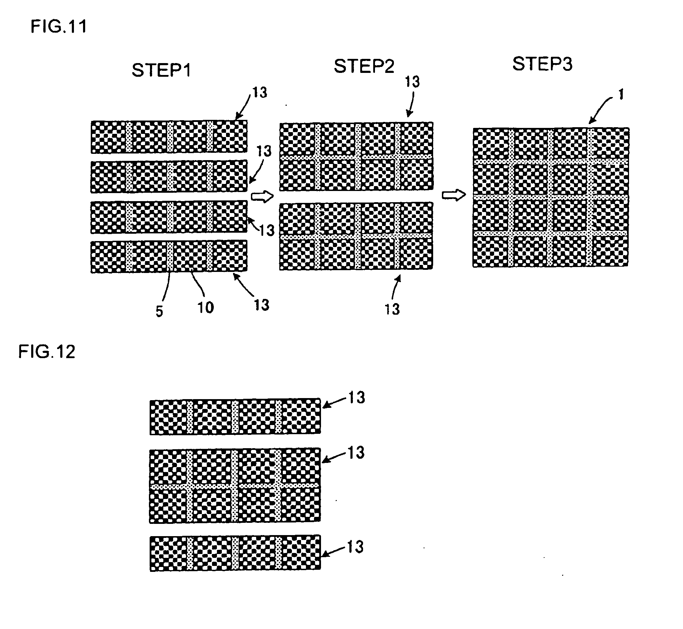

As shown in the step 1 of Fig. 11, honeycomb segments 10 are bonded to have 1 row × 4 rows and subjected to hot air drying (Fig. 1: S4) to form a small block 13, and two small blocks 13 are bonded together as shown in the step 2 of Fig. 11, and the blocks are further bonded together to obtain a honeycomb segment bonded article 1 of 4 rows × 4 rows as shown in the step 3 of Fig. 11.

Alternatively, as shown in Fig. 12 following the step 1 of Fig. 11, after bonding two small blocks 13 of 1 row × 4 rows, other small blocks 13 may further be bonded on the upper face and the lower face.

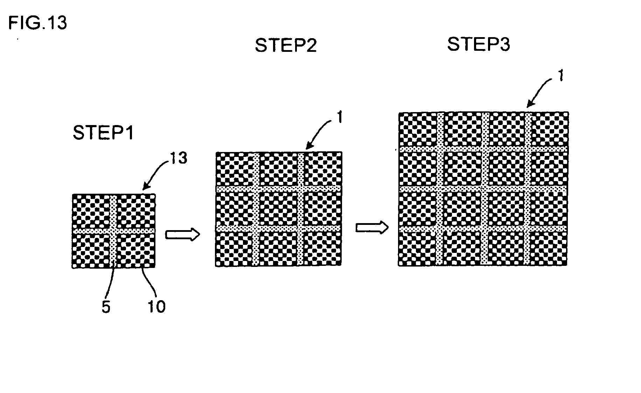

As shown in the step 1 of Fig. 13, four honeycomb segments 10 of 2 rows × 2 rows are bonded and subjected to hot air drying (Fig. 1: S4) to produce a small block 13, and, as shown in the step 2 of Fig. 13, honeycomb segments 10 of one layer are bonded on one side and an adjacent side of the small block 13 to form a bonded article of 3 rows × 3 rows, followed by drying. Then, as shown in the step 3 of Fig. 13, honeycomb segments 10 are further bonded on one side and an adjacent side at the outer peripheral faces to obtain a honeycomb segment bonded article 1 of 4 rows × 4 rows to form a honeycomb segment bonded article 1.

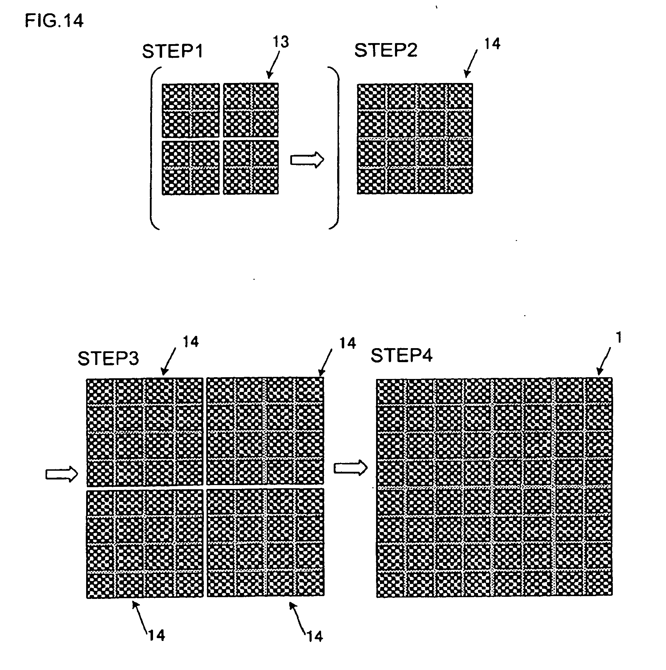

As in the step 1 of Fig. 14, four honeycomb segments 10 of 2 rows × 2 rows are bonded and subjected to hot air drying (Fig. 1: S4) to produce 16 small blocks 13, and, as shown in the step 2 of Fig. 14, four small blocks 13 are bonded and subjected to hot air drying to produce four medium-sized blocks 14 of 4 rows × 4 rows. Next, as shown in the step 3 of Fig. 14, four medium-sized blocks 14 of 4 rows × 4 rows are disposed and bonded together to obtain a honeycomb segment bonded article 1 where 64 honeycomb segments 10 of 8 rows × 8 rows as shown in the step 4 of Fig. 14. The medium-sized block 14 is also a preliminary block for forming a honeycomb segment bonded article 1.

In the case of the bonding material containing fibrous particles such as ceramic fibers having little influence of drying, as shown in the step 2 of Fig. 14, the medium-sized block 14 of 4 rows × 4 rows may directly be produced by omitting production of the small blocks 13 where four honeycomb segments 10 of 2 rows × 2 rows are bonded as shown in the step 1 of Fig. 14. Since the medium-sized block in this case has two or more honeycomb segments 10 surrounded by the bonding material layer 5 at the whole outer peripheral faces like a honeycomb structure produced by a conventional bonding method, a variance in bonding strength is easily caused upon drying in the positions surrounded by four honeycomb segments 10 in a cross sectional view of the bonding material layer 5. When a honeycomb structure (honeycomb segment bonded article 1) is produced by the use of such a medium-sized block, an effect in inhibiting unevenness of the bonding material layer 5 is lowered, and an effect in improving thermal shock resistance is reduced. However, since the number of the steps can be reduced by omitting the step of producing small blocks, a honeycomb structure can be produced at low costs. Therefore, in the case of bonding material containing fibrous particles such as ceramic fibers having little influence of drying, it is also possible to select a production method where the step of producing small blocks is omitted depending on which of the variance in bonding strength and the production cost is emphasized from use environment and the like of the honeycomb structure.

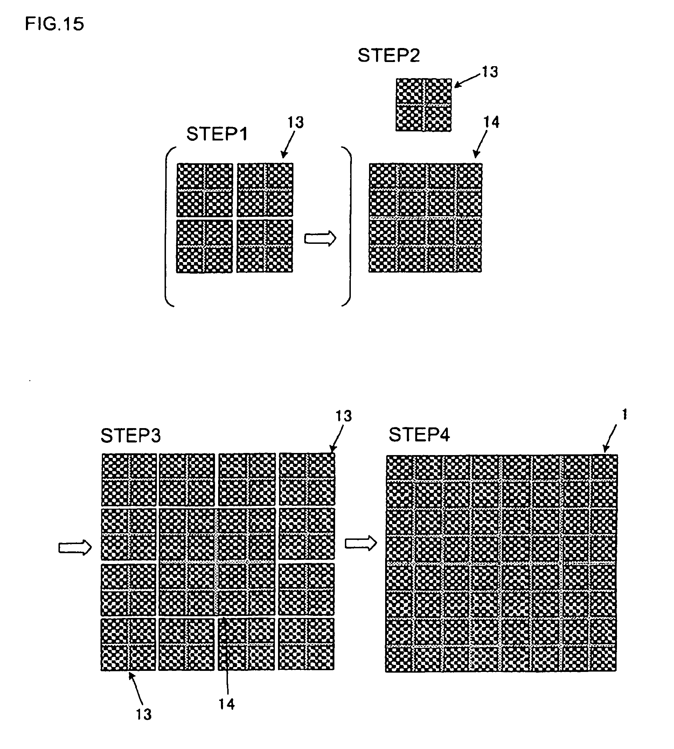

As shown in the step 1 of Fig. 15, four honeycomb segments 10 of 2 rows × 2 rows are bonded and subjected to hot air drying (Fig. 1: S4) to produce 16 small blocks 13, and, as shown in the step 2 of Fig. 15, four small block 13 are bonded and subjected to hot air drying to produce a medium-sized block 14 of 4 rows × 4 rows. Next, as shown in the step 3 of Fig. 15, 12 small blocks 13 of 2 rows × 2 rows are disposed on the outer periphery of the medium-sized block 14 of 4 rows × 4 rows and bonded to form a honeycomb segment bonded article 1 where 64 honeycomb segments 10 of 8 rows × 8 rows are bonded together as shown in the step 4 of Fig. 15.

In the case of bonding material containing fibrous particles such as ceramic fibers having little influence of drying, as shown in the step 2 of Fig. 15, the medium-sized block 14 of 4 rows × 4 rows may directly be produced by omitting production of the small blocks 13 where four honeycomb segments 10 of 2 rows × 2 rows are bonded as shown in the step 1 of Fig. 15.

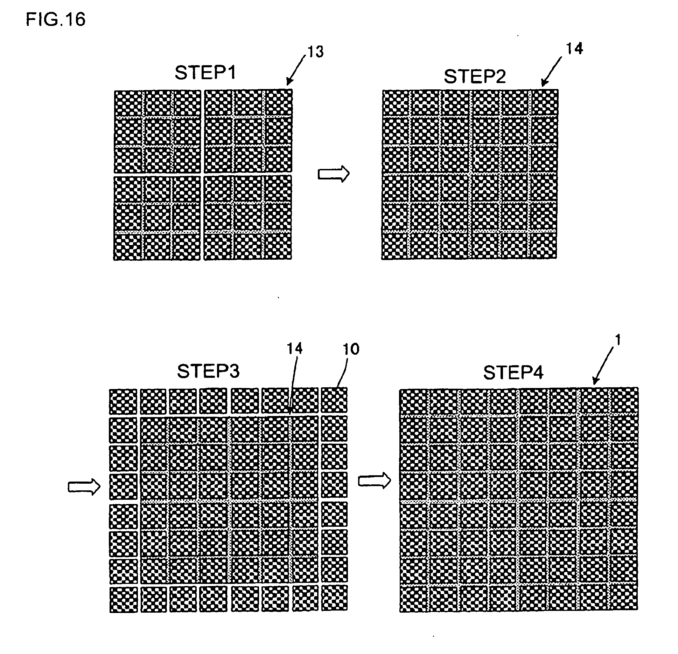

As shown in the step 1 of Fig. 16, nine honeycomb segments 10 of 3 rows × 3 rows are bonded together and subjected to hot air drying (Fig. 1: S4) to produce four small blocks 13. Next, as shown in the step 2 of Fig. 16, the four small blocks 13 of rows × 3 rows are bonded and subjected to hot air drying to produce a medium-sized block 14 of 6 rows × 6 rows. Further, as shown in the step 3 of Fig. 16, honeycomb segments 10 of one layer are disposed on the outer peripheral faces of the medium-sized block 14 of 6 rows × 6 rows and bonded to form a honeycomb segment bonded article 1 where 64 honeycomb segments 10 of 8 rows × 8 rows are bonded as shown in the step 4 of Fig. 16.

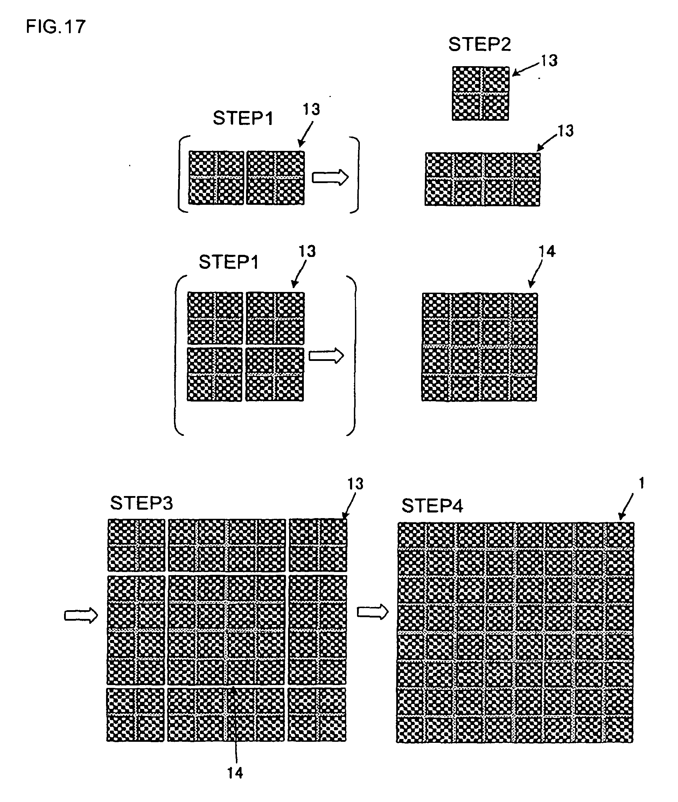

As show in the step 1 of Fig. 17, four honeycomb segments 10 of 2 rows × 2 rows are bonded and subjected to hot air drying (Fig. 1: S4) to produce 16 small blocks 13. As shown in the step 2 of Fig. 17, four small blocks 13 of 2 rows × 2 rows are bonded and subjected to hot air drying to produce a medium-sized block 4 of 4 rows × 4 rows, and two small blocks 13 of 2 rows × 2 rows are bonded and subjected to hot air drying to produce four small blocks 13 of 4 rows × 2 rows. Next, as shown in the step 3 of Fig. 17, four medium-sized blocks 13 of 4 rows × 2 rows and four small blocks 13 of 2 rows x 2 rows are disposed around the outer periphery of the medium-sized block of 4 rows × 4 rows, and they are bonded together to obtain a honeycomb segment bonded article 1 where 64 honeycomb segments 10 of 8 rows × 8 rows are bonded together as shown in the step 4 of Fig. 17.

In the case of a bonding material containing fibrous particles such as ceramic fibers having little influence of drying, the small block 13 of 4 rows × 2 rows and the medium-sized block 14 of 4 rows × 4 rows as shown in the step 2 of Fig. 17 may directly be produced by omitting the production of the small block 13 where four honeycomb segments 10 of 2 rows × 2 rows are bonded as shown in the step 1 of Fig. 17.

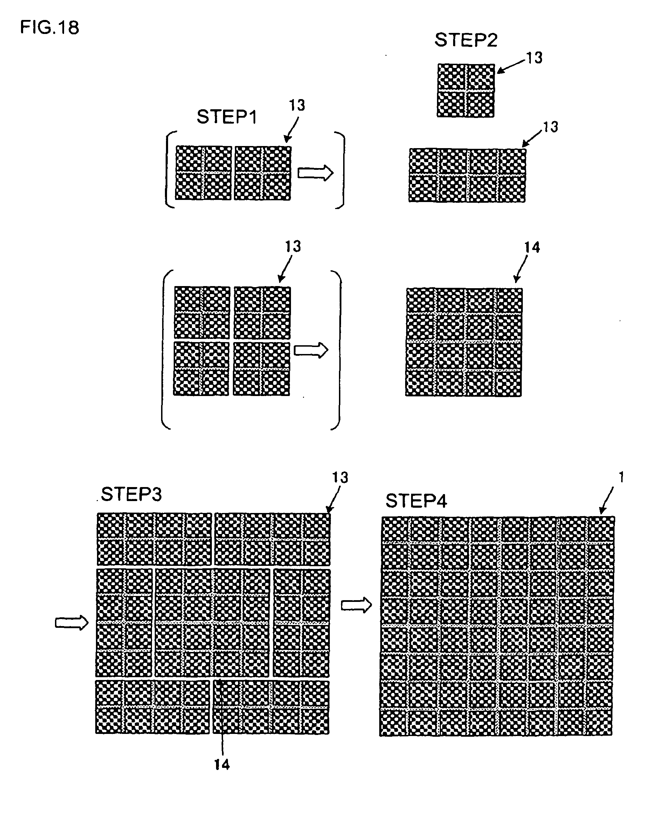

As shown in the step 1 of Fig. 18, four honeycomb segments 10 of 2 rows × 2 rows are bonded and subjected to hot air drying (Fig. 1: S4) to produce 16 small blocks 13. As shown in the step 2 of Fig. 18, four small blocks 13 of 2 rows × 2 rows are bonded and subjected to hot air drying to produce a medium-sized block of 4 rows × 4 rows, and two small blocks 13 are bonded and subjected to hot air drying to produce 8 small blocks 13 of 4 rows × 2 rows. Next, as shown in the step 3 of Fig. 18, eight small blocks 13 of 4 rows × 2 rows are disposed around the outer periphery of the medium-sized block of 4 rows × 4 rows, and they are bonded together to form a honeycomb segment bonded article 1 where 64 honeycomb segments 10 of 8 rows × 8 rows are bonded as shown in the step 4 of Fig. 18.

In the case of a bonding material containing fibrous particles such as ceramic fibers having little influence of drying, the small block 13 of 4 rows × 2 rows and the medium-sized block 14 of 4 rows × 4 rows as shown in the step 2 of Fig. 18 may directly be produced by omitting the production of the small block 13 where four honeycomb segments 10 of 2 rows × 2 rows are bonded as shown in the step 1 of Fig. 18.

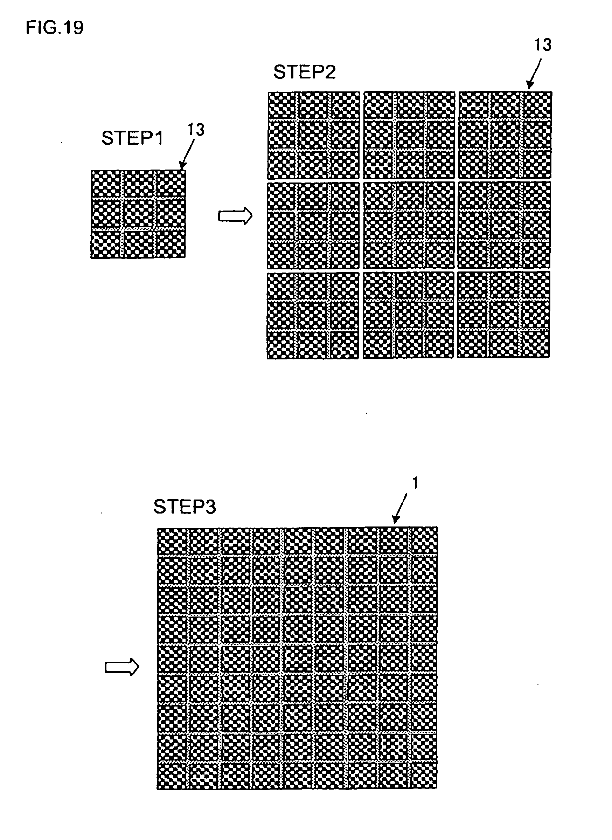

Next, a method of producing a honeycomb bonded article of 9 rows × 9 rows will be described. As shown in the step 1 of Fig. 19, nine honeycomb segments 10 of 3 rows × 3 rows are bonded and subjected to hot air drying (Fig. 1: S4) to produce nine small blocks 13. The nine small blocks 13 are disposed as shown in the step 2 of Fig. 19 and bonded to form a honeycomb segment bonded article 1 where 81 honeycomb segments 10 of 9 rows × 9 rows are bonded as shown in the step 3 of Fig. 19.

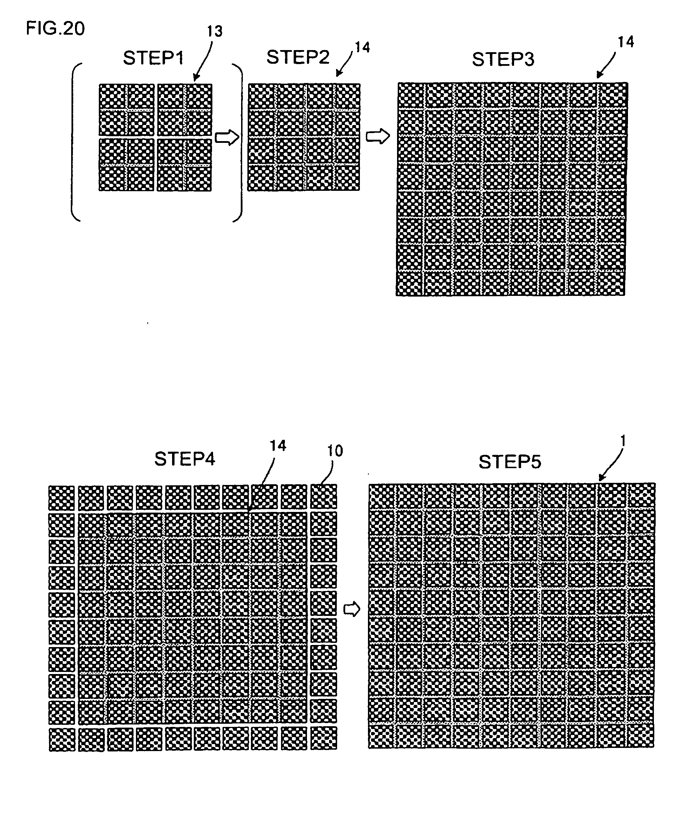

Next, a method for producing a honeycomb bonded article of 10 rows × 10 rows will be described. As shown in the step 1 of Fig. 20, four honeycomb segments 10 of 2 rows × 2 rows are bonded and subjected to hot air drying (Fig. 1 : S4) to produce 16 small blocks 13. As shown in the step 2 of Fig. 20, four small blocks 13 of 2 rows × 2 rows are bonded and subjected to hot air drying to produce four medium-sized blocks 14 of 4 rows × 4 rows. Next, as shown in the step 3 of Fig. 20, four medium-sized blocks 14 of 4 rows × 4 rows are bonded and subjected to hot air drying to produce one medium-sized block 14 of 8 rows × 8 rows. Further, as shown in the step 4 of Fig. 20, honeycomb segments 10 of one layer are disposed on the outer peripheral faces of the medium-sized blocks 14 of 8 rows × 8 rows and bonded to form a honeycomb segment bonded article 1 where 100 honeycomb segments 10 of 10 rows × 10 rows are bonded together.

In the case of a bonding material containing fibrous particles such as ceramic fibers having little influence of drying, the medium-sized block 14 of 4 rows × 4 rows as shown in the step 2 of Fig. 20 may directly be produced by omitting the production of the small block 13 where four honeycomb segments 10 of 2 rows × 2 rows are bonded as shown in the step 1 of Fig. 20.

As shown in the step 1 of Fig. 21, 25 honeycomb segments 10 of 5 rows × 5 rows are bonded and subjected to hot air drying (Fig. 1: S4) to produce four medium-sized blocks 14. As shown in the step 2 of Fig. 21, four medium-sized blocks 14 are disposed and bonded together to form a honeycomb segment bonded article 1 where 100 honeycomb segments 10 of 10 rows × 10 rows as shown in the step 3 of Fig. 21 are bonded together.

As described above, upon producing a honeycomb segment bonded article 1, by previously producing a small block 13 as a preliminary block having no or one or less honeycomb segment 10 surrounded by the bonding material layer 5 formed by a bonding material at the whole outer peripheral walls and unitarily bonding the small blocks 13 together or honeycomb segments 10 of one layer on the outer peripheral faces of the small block 13, a honeycomb segment bonded article 1 having improved thermal shock resistance can be produced. The small block 13 has one or less honeycomb segment 10 surrounded by the bonding material layer 5 formed by a bonding material. If there are two or more honeycomb segments 10 surrounded by the bonding material layer 5 at the whole outer peripheral walls as shown in Fig. 22, there is caused hardening of the bonding material at A between outer peripheral segments, shrinkage toward outside of the bonding material at B in the outer peripheral position of an inside segment and hardening, and hardening of the bonding material at C with a time difference, which leads to increase in the porosity of the bonding material texture at C or generation of fine cracks in some cases. It can be considered that bonding strength of the honeycomb segment bonded article 1 is decreased. Also, in the case of performing production of a preliminary block a plurality of times by unitarily bonding a plurality of small blocks 13 or honeycomb segments 10, movement of each of the honeycomb segments or the preliminary block according to drying shrinkage and hardening of the bonding material can be made similar, and a variance (unevenness) of the manner of formation of the bonding material layer can be reduced.

As described above, honeycomb segments 10 are bonded to produce a small block 13 (Fig. 1: S3), and, after drying (Fig. 1: S4) the small block 13, the small blocks 13 are bonded together, or honeycomb segments 10 of one layer are unitarily bonded to the outer peripheral faces of the small block 13 to produce a bonded article (Fig. 1: S5), the whole bonded article is heated for hot air drying (Fig. 1: S6) and calcined (Fig. 1: S7). That is, the small block 13 is produced in advance and dried in advance to uniformalize the movement of the honeycomb segments in accordance with drying shrinkage and hardening of the bonding material, thereby reducing the variance in the manner of the formation of the bonding material layer 5 and reducing the variance in properties of the bonding material layer 5 in each gap in the honeycomb segment bonded article 1. In particular, when a bonding material containing no inorganic fiber such as a ceramic fiber is used, properties of the honeycomb material layer 5 are prone to be uneven. However, upon producing a honeycomb segment bonded article, by previously producing a small block as a preliminary block having no or one or less honeycomb segment surrounded by the bonding material layer formed by a bonding material at the whole outer peripheral walls and unitarily bonding the small blocks together or honeycomb segments of one layer on the outer peripheral faces of the small block, thermal shock resistance of the honeycomb segment bonded article can be improved. In addition, in the case that a large honeycomb structure is produced, since the manner of drying of the bonding material is different between the outside and the inside of the bonded article, the organization of the bonding material layer is prone to have a variance, and the properties of the bonding material layer are prone to have a variance. However, by producing a small block as a preliminary block in advance and unitarily bonding the small blocks together or honeycomb segments of one layer on the outer peripheral faces of the small block, thermal shock resistance of the honeycomb segment bonded article can be improved.

In addition, in the case of a bonding material containing fibrous particles such as ceramic fibers having little influence of drying, the medium-sized block 14 of 4 rows × 4 rows may directly be produced. Since the medium-sized block in this case have two or more honeycomb segments 10 surrounded by the bonding material layer at the whole outer peripheral faces like a honeycomb structure produced by a conventional production method, a variance in bonding strength is prone to be caused in a position surrounded by four honeycomb segments 10 in a cross section of the bonding material layer 5 upon drying. Therefore, when a honeycomb structure is produced by the use of such a medium-sized block, an effect in inhibiting unevenness of the bonding material layer 5 is decreased, and an effect in improving thermal shock resistance is reduced. However, since the step of producing a small block can be omitted to reduce the number of steps, a honeycomb structure can be produced at low costs. Therefore, in the case of a bonding material containing fibrous particles such as ceramic fibers having little influence of drying, it is also possible to select a production method where the step of producing small blocks is omitted depending on which of the variance in bonding strength and the production cost is emphasized from use environment and the like of the honeycomb structure.

Then, the outer periphery of the dried honeycomb segment bonded article 1 is ground into a cylindrical shape, and a coating material is applied on the outer peripheral face. Then, a thermal treatment is performed at about 700°C for about 2 hours to obtain a honeycomb structure.

### Example

Hereinbelow, the present invention will be described in more detail on the basis of Examples and reference Examples. However, the present invention is by no means limited to the Examples.

### (Production of honeycomb segment)

As raw materials for the honeycomb segment, an SiC powder and a metal Si powder were mixed together at a mass ratio of 80 : 20, and to the mixture were added a pore former an organic binder, a surfactant, and water to produce kneaded clay having plasticity. The kneaded clay was subjected to extrusion forming and drying to obtain a ceramic formed article having a partition wall thickness of 310 µm, a cell density of about 46.5 cells/cm² (300 cells/in²), a cross section of a regular tetragon having a side of 35 mm, and a length of 178 mm. In the ceramic formed article, both the end faces were subjected to plugging in such a manner that the end faces show checkerwise patterns. That is, the plugging was performed in such a manner that adjacent cells were plugged in the mutually opposite end portions. As the plugging material, a material similar to the honeycomb segment raw material was used. After plugging both the end faces of the cells and dried, degreasing was performed at about 400°C in an ambient atmosphere. Then, firing was performed at about 1450°C in an Ar inert atmosphere to obtain a honeycomb segment where SiC crystal particles were bonded with Si.

### (Preparation of bonding material)

Water was further mixed with a mixture of 41 mass % of SiC fine particles, 16.5 mass % of SiC coarse particles, 22 mass % of mica, 20 mass % of colloidal silica, 0.5 mass % of bentonite, 1.5 mass % of an organic pore former (additional compounding based on 100 mass % of total main components of SiC, SiC coarse particles, mica, colloidal silica and bentonite), 0.4 mass % of an organic binder (additional compounding based on 100 mass % of total main components of SiC, SiC coarse particles, mica, colloidal silica and bentonite), and 0.04 mass % of a dispersant (additional compounding based on 100 mass % of total main components of SiC, SiC coarse particles, mica, colloidal silica and bentonite) as the bonding material 1, and kneading was performed for 30 minutes by a mixer to obtain a pasty bonding material. At this time, the amount of water added was adjusted in such a manner that the paste had a viscosity of 20 to 60 Pa·s. A mixture of SiC fine particles of 43 mass %, aluminosilicate fibers of 35 mass %, colloidal silica of 21 mass %, bentonite of 1 mass %, an organic pore former of 1.0 mass % (additional compounding based on total main components), an organic binder of 0.4 mass % (additional compounding based on total main components), and a dispersant of 0.04 mass % (additional compounding based on total main components) was adjusted as the bonding material 2 in the same manner as in the bonding material 1.

### (Bonding)

The bonding material 1 was applied on the honeycomb segment bonded face, and the step of bonding honeycomb segments one by one under pressure was repeated to produce three kinds of bonded articles each having 12 honeycomb segments of four wide, three high (hereinbelow described as 3 rows × 4 rows), 16 honeycomb segments of 4 rows × 4 rows, or 36 honeycomb segments of 6 rows × 6 rows (bonding method 1). Then, after drying at 140°C for 2 hours by a hot air drier, a thermal treatment was performed at 700°C for 2 hours in an electric furnace to obtain bonded articles (Comparative Examples 1 to 3). Bonded articles (Comparative Examples 4 to 6) were obtained by the use of the bonding material 2 in a similar manner.

Further, a bonded article (Comparative Example 7) having 64 honeycomb segments of 8 rows × 8 rows was obtained in a similar manner using the bonding material 1. In addition, three kinds of bonded articles (Comparative Examples 8 to 10) each having 64 honeycomb segments of 8 rows × 8 rows, 81 honeycomb segments of 9 rows × 9 rows, or 100 honeycomb segments of 10 rows × 10 rows were produced in a similar manner using the bonding material 2. Incidentally, a method where a bonded article is produced by drying only once without producing a preliminary block such as a small block is defined as the bonding method 1.

### Production of a bonded article of 4 wide, 3 high (3 rows × 4 rows):

In the first place, bonding was performed to give a small block shape of 2 rows × 2 rows in a similar manner as in the bonded articles (Comparative Examples 1 to 10), and drying was performed at 140°C for two hours by a hot air drier to produce a small block bonded article. Then, bonded articles were produced by the use of the bonding material 1 and the bonding material 2 by the bonding method 2 (Fig. 4), where the remaining elementary articles (honeycomb segments) were bonded to the small block bonded article and dried in a similar manner to obtain a bonded article of 3 rows × 4 rows, and the bonding method 3 (Fig. 5), where two small block bonded articles each having honeycomb segments bonded and dried in 2 rows × 3 rows were produced and then bonded together, followed by drying again in a similar manner to produce a bonded article of 3 rows × 4 rows. It was subjected to a thermal treatment at 700°C for two hours in an electric furnace to obtain a bonded article (Examples 1 to 4).

### Production of a bonded article of 4 wide, 4 high (4 rows × 4 rows):

In the first place, bonding was performed to give a small block shape of 2 rows × 2 rows in a similar manner as in the bonded articles (Comparative Examples 1 to 10), and drying was performed at 140°C for two hours by a hot air drier to produce a small block bonded article. Then, bonded articles were produced by the use of the bonding material 1 and the bonding material 2 by the bonding method 4 (Fig. 6), where the remaining elementary articles were bonded to the small block in a similar manner and dried again in a similar manner to produce a bonded article of 4 rows × 4 rows, and the bonding method 5 (Fig. 7), where four small block bonded articles each having honeycomb segments bonded and dried in 2 rows × 2 rows were produced and then bonded together, followed by drying again in a similar manner to produce a bonded article of 4 rows × 4 rows. It was subjected to a thermal treatment at 700°C for two hours in an electric furnace to obtain a bonded article (Examples 5 to 8).

### Production of a bonded article of 6 wide, 6 high (6 rows × 6 rows):

In the first place, bonding was performed to give a small block shape of 2 rows × 2 rows in a similar manner as in the bonded articles (Comparative Examples 1 to 10), and drying was performed at 140°C for two hours by a hot air drier to produce a small block bonded article. Then, bonded articles were produced by the use of the bonding material 1 and the bonding material 2 by the bonding method 6 (Fig. 8), where elementary articles of one row were bonded around the small block and dried again in a similar manner to produce a medium-sized block of 4 rows × 4 rows, followed by bonding elementary articles of one row around the medium-sized block and dried again in a similar manner to produce a bonded article of 6 rows × 6 rows; the bonding method 7 (Fig. 9), where nine small block bonded articles each having honeycomb segments bonded in 2 rows × 2 rows bonded and dried at 140°C for 2 hours by a hot air drier were produced and then bonded together, followed by bonding the small blocks together drying again in a similar manner to produce a bonded article of 6 rows × 6 rows; and the bonding method 8 (Fig. 10), where four small block bonding articles were produced by performing bonding in 3 rows × 3 rows and drying at 140°C for 2 hours by a hot air drier, followed by bonding the small blocks together and drying them again in a similar manner to produce a bonded article of 6 rows × 6 rows. It was subjected to a thermal treatment at 700°C for two hours in an electric furnace to obtain a bonded article (Examples 11 to 14).

### Production of a bonded article of 8 wide, 8 high (8 rows × 8 rows):

A bonded article of 8 rows × 8 rows was produced by the use of the bonding material 1 or the bonding material 2 by the bonding method 12 (Fig. 14), where, after producing a bonded article by performing bonding in 2 rows × 2 rows in a similar manner as in the bonded articles (Comparative Examples 1 to 10), and drying was performed at 140°C for two hours by a hot air drier, four bonded articles were bonded and dried again in a similar manner to obtain four medium-sized block bonded articles of 4 rows × 4 rows, or, after directly obtaining four medium-sized block bonded articles, the four medium-sized block bonded articles were bonded together and dried in a similar manner to produce a bonded article of 8 rows × 8 rows. It was subjected to a thermal treatment at 700°C for two hours in an electric furnace to obtain a bonded article (Examples 15 to 17).

In addition, a bonded article of 8 rows × 8 rows was produced by the use of the bonding material 2 by the bonding method 13 (Fig. 15), where, after producing a bonded article by performing bonding in 2 rows × 2 rows in a similar manner and drying at 140°C for two hours by a hot air drier, four bonded articles were bonded and dried again in a similar manner to obtain a medium-sized block bonded article of 4 rows × 4 rows, or, after directly obtaining a medium-sized block bonded article, small blocks of 2 rows × 2 rows were bonded to the medium-sized block bonded article in the outer peripheral portion thereof and dried in a similar manner to produce a bonded article of 8 rows × 8 rows; and a bonding method 14 (Fig. 16), where, after producing four small block bonded articles by performing bonding in 3 rows × 3 rows and drying at 140°C for two hours by a hot air drier, the four small block bonded articles of 3 rows × 3 rows were bonded and dried again in a similar manner to obtain a medium-sized block bonded article of 6 rows × 6 rows, followed by bonding honeycomb segments of one layer to the outer peripheral faces of the medium-sized block bonded article of 6 rows × 6 rows and drying again in a similar method to produce a bonded article of 8 rows × 8 rows. It was subjected to a thermal treatment at 700°C for two hours in an electric furnace to obtain a bonded article (Examples 18 to 20).

Further, a bonded article of 8 rows × 8 rows was produced by the use of the bonding material 2 by the bonding method 15 (Fig. 17), where, after producing a bonded article by performing bonding in 2 rows × 2 rows in a similar manner and drying at 140°C for two hours by a hot air drier, four bonded articles were bonded and dried again in a similar manner to obtain a medium-sized block bonded article of 4 rows × 4 rows, and two bonded articles were bonded and dried again in a similar manner to obtain four small block bonded articles of 4 rows × 2 rows, or, after directly obtaining a medium-sized block bonded article of 4 rows × 4 rows and four small block bonded articles of 4 rows × 2 rows, four small blocks of 4 rows × 2 rows and four small blocks of 2 rows × 2 rows were bonded to the medium-sized block bonded article of 4 rows × 4 rows in the outer peripheral portion thereof and dried again in a similar manner to produce a bonded article of 8 rows × 8 rows; and the bonding method 16 (Fig. 18), where, after obtaining 16 bonded articles by performing bonding in 2 rows × 2 rows in a similar manner and drying at 140°C for two hours by a hot air drier, a medium-sized block bonded article of 4 rows × 4 rows was obtained by bonding and drying again four bonded articles in a similar manner and eight small block bonded articles of 4 rows × 2 rows by bonding and drying again two bonded articles in a similar manner, or, after directly obtaining a medium-sized block bonded article 1 of 4 rows × 4 rows and eight small block bonded articles of 4 rows × 2 rows, the eight small block bonded articles of 4 rows × 2 rows were bonded to the medium-sized block bonded article 1 of 4 rows × 4 rows in the outer peripheral portion thereof and dried again in a similar method to produce a bonded article of 8 rows × 8 rows. It was subjected to a thermal treatment at 700°C for two hours in an electric furnace to obtain a bonded article (Examples 21 to 24).

### Production of a bonded article of 9 wide, 9 high (9 rows × 9 rows):

A bonded article of 9 rows × 9 rows was produced by the use of the bonding material 2 by a bonding method 17 (Fig. 19), wherein, after bonding was performed in a similar manner as in the bonded articles (Comparative Examples 1 to 10) and drying was performed at 140°C for two hours by a hot air drier to give nine small block bonded articles of 3 rows × 3 rows, the nine small block bonded articles were bonded together and dried again in a similar manner to produce a bonded article of 9 rows × 9 rows. It was subjected to a thermal treatment at 700°C for two hours in an electric furnace to obtain a bonded article (Example 25).

### Production of a bonded article of 10 wide, 10 high (10 rows × 10 rows):

A bonded article of 10 rows × 10 rows was produced by the use of the bonding material 2 by a bonding method 18 (Fig. 20), wherein, after bonding was performed in a similar manner as in the bonded articles (Comparative Examples 1 to 10) and drying was performed at 140°C for two hours by a hot air drier to produce a bonded article, followed by bonding four bonded articles and drying again in a similar method to obtain four medium-sized block bonded articles of 4 rows × 4 rows, or, after four medium-sized block bonded articles of 4 rows × 4 were directly obtained, four medium-sized block bonded articles of 4 rows × 4 rows were bonded and dried in a similar method to obtain a block bonded article of 8 rows × 8 rows, honeycomb segments of one layer were bonded to the medium-sized block bonded article of 8 rows × 8 rows in the outer peripheral faces thereof and dried again in a similar method to produce a bonded article of 10 rows × 10 rows; and a bonding method 19 (Fig. 21), where, after producing four medium-sized block bonded articles by bonding honeycomb segments in 5 rows × 5 rows and dried at 140°C for two hours, the four medium-sized block bonded articles are bonded together and dried again in a similar method to produce a bonded article of 10 rows × 10 rows. It was subjected to a thermal treatment at 700°C for two hours in an electric furnace to obtain a bonded article (Example 26 to 28).

### × (Bending strength of bonded portion)

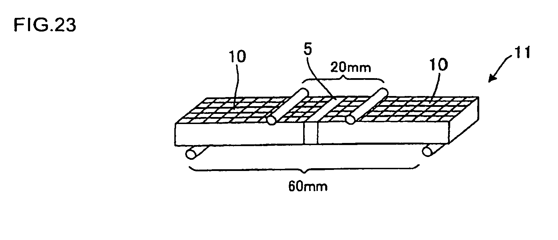

A test piece having a width of 15 mm, a thickness of 10 mm, and a length of 70 mm as shown in Fig. 23 was cut out from each bonded position in an almost central position in the longitudinal direction of each of the bonded articles and subjected to measurement for four point bending strength with an outer span of 60 mm and an inner span of 20 mm. In order to check a variance in strength values in each bonded position, a ratio of the minimum value to the maximum value in each of all the groups of strength values obtained above was calculated and compared. Depending on the bending strength ratio, evaluations were given as excellent for 0.8 or more, good for 0.5 or more and below 0.8, fair for 0.2 or more and below 0.5, and bad for below 0.2.

**[Table 1]**

| | Bonded article (height × width) | Bonding material | Bonding method | Drying time | Bending strength ratio Minimum / Maximum | Evaluation |
|---|---|---|---|---|---|---|
| Comp. Ex. 1 | 3 rows × 4 rows | 1 | 1 | 1 | 0.11 | Bad |
| Comp. Ex. 2 | 4 rows × 4 rows | 1 | 1 | 1 | 0.03 | Bad |
| Comp. Ex. 3 | 6 rows × 6 rows | 1 | 1 | 1 | 0.03 | Bad |
| Comp. Ex. 4 | 3 rows × 4 rows | 2 | 1 | 1 | 0.44 | Fair |
| Comp. Ex. 5 | 4 rows × 4 rows | 2 | 1 | 1 | 0.41 | Fair |
| Comp. Ex. 6 | 6 rows × 6 rows | 2 | 1 | 1 | 0.29 | Fair |
| Comp. Ex. 7 | 8 rows × 8 rows | 1 | 1 | 1 | 0.03 | Bad |
| Comp. Ex. 8 | 8 rows × 8 rows | 2 | 1 | 1 | 0.18 | Bad |
| Comp. Ex. 9 | 9 rows × 9 rows | 2 | 1 | 1 | 0.15 | Bad |
| Comp. Ex. 10 | 10 rows × 10 rows | 2 | 1 | 1 | 0.09 | Bad |
| *Example 1 | 3 rows × 4 rows | 1 | 2 | 2 | 0.93 | Excellent |
| Example 2 | 3 rows × 4 rows | 1 | 3 | 2 | 0.91 | Excellent |
| *Example 3 | 3 rows × 4 rows | 2 | 2 | 2 | 0.98 | Excellent |
| Example 4 | 3 rows × 4 rows | 2 | 3 | 2 | 0.97 | Excellent |
| *Example 5 | 4 rows × 4 rows | 1 | 4 | 2 | 0.90 | Excellent |
| Example 6 | 4 rows × 4 rows | 1 | 5 | 2 | 0.91 | Excellent |
| *Example 7 | 4 rows × 4 rows | 2 | 4 | 2 | 0.98 | Excellent |
| Example 8 | 4 rows × 4 rows | 2 | 5 | 2 | 0.96 | Excellent |
| * Example 9 | 6 rows × 6 rows | 1 | 6 | 3 | 0.88 | Excellent |
| Example 10 | 6 rows × 6 rows | 1 | 7 | 2 | 0.87 | Excellent |
| Example 11 | 6 rows × 6 rows | 1 | 8 | 2 | 0.90 | Excellent |
| * Example 12 | 6 rows × 6 rows | 2 | 6 | 3 | 0.92 | Excellent |
| Example 13 | 6 rows × 6 rows | 2 | 7 | 2 | 0.93 | Excellent |
| Example 14 | 6 rows × 6 rows | 2 | 8 | 2 | 0.93 | Excellent |
| Example 15 | 8 rows × 8 rows | 1 | 12 | 2 | 0.81 | Excellent |
| Example 16 | 8 rows × 8 rows | 2 | 12 | 3 | 0.93 | Excellent |
| Example 17 | 8 rows × 8 rows | 2 | 12* | 2 | 0.37 | Fair |
| Example 18 | 8 rows × 8 rows | 2 | 13 | 3 | 0.91 | Excellent |
| Example 19 | 8 rows × 8 rows | 2 | 13* | 2 | 0.38 | Fair |
| Example 20 | 8 rows × 8 rows | 2 | 14 | 3 | 0.87 | Excellent |
| Example 21 | 8 rows × 8 rows | 2 | 15 | 3 | 0.92 | Excellent |
| Example 22 | 8 rows × 8 rows | 2 | 15* | 2 | 0.42 | Fair |
| Example 23 | 8 rows × 8 rows | 2 | 16 | 3 | 0.91 | Excellent |
| Example 24 | 8 rows × 8 rows | 2 | 16* | 2 | 0.41 | Fair |
| Example 25 | 9 rows × 9 rows | 2 | 17 | 2 | 0.79 | Good |
| Example 26 | 10 rows × 10 rows | 2 | 18 | 4 | 0.75 | Good |
| Example 27 | 10 rows × 10 rows | 2 | 18* | 3 | 0.39 | Fair |
| Example 28 | 10 rows × 10 rows | 2 | 19 | 2 | 0.37 | Fair |

| | | | | | | |
|---|---|---|---|---|---|---|
| In 12*, 13*, 15*, 16*, and 18*, the step 1 was omitted. * denotes a reference example. | | | | | | |

### (Results of bending strength property evaluation)

From Table 1, each of the bonded articles (Comparative Examples 1 to 10) produced by the bonding method 1 had a small ratio of the minimum strength to the maximum strength to show a problem of a large variance in strength depending on the bonding positions. In particular, the tendency was remarkable in the case of using the bonding material 1 containing no fibrous particles such as ceramic fibers and in large sized bonded articles of 8 rows × 8 rows or more. In contrast, in Examples 1 to 28, where bonding with a final shape was performed after producing small blocks or a medium-sized block, the strength ratio of the minimum strength to the maximum strength was improved to be nearly 1, and a variance depending on the bonding portions was little.

In addition, in comparison with a small block having honeycomb segments of 2 rows × 2 rows, 3 rows × 3 rows, 1 rows × 4 rows, 2 rows × 3 rows, or 2 rows × 4 rows having one or less honeycomb segment surrounded by the bonding material layer and being formed by a bonding material layer at the all outer peripheral walls, the strength ratio of the minimum strength to the maximum strength of the cases (Examples 17, 19, 22, 24, 27, and 28) of using a large medium-sized block of 4 rows × 4 rows or 5 rows × 5 rows was small. However, it was improved in comparison with Comparative Examples (bonding method 1), and the number of drying times can be reduced with respect to the aforementioned cases using a small block. Therefore, it is also possible to produce a bonded article by the use of a large medium-sized block of 4 rows × 4 rows or 5 rows × 5 rows depending on the use conditions of the honeycomb structure.

### (Evaluation for thermal resistance)

A honeycomb structure was obtained by bonding a bonded article having 16 honeycomb segments of 4 rows × 4 rows produced under conditions similar to those for the bonded articles (Comparative Examples 2 and 5 and Examples 5 to 7) using the bonding material 1 or the bonding material 2 into a final shape, drying at 140°C, grinding the outer periphery into a cylindrical shape, applying a coating material on the outer peripheral faces thereof, and then thermally treating at 700°C for two hours. In addition, a honeycomb structure was obtained by bonding a bonded article having 64 honeycomb segments of 8 rows × 8 rows produced under conditions similar to those for the bonded articles (Comparative Examples 8 and Examples 16, 17 23, and 24) using the bonding material 2 into a final shape, drying at 140°C, grinding the outer periphery into a cylindrical shape, applying a coating material on the outer peripheral faces thereof, and then thermally treating at 700°C for two hours. The honeycomb structures were subjected to a rapid heating test (burner spalling test) at a test temperature of 900°C, and presence/absence of a crack in the honeycomb structures after the test was checked by observation to give evaluations as good for no crack, fair for presence of a minimal crack, and bad for presence of a crack.

**[Table 2]**

| | Bonded article (height × width) | Bonding material | Bonding method | Drying time | Bending strength ratio Minimum / Maximum | Burner spalling evaluation 900°C |
|---|---|---|---|---|---|---|
| Comp. Ex. 2 | 4 rows × 4 rows | 1 | 1 | 1 | 0.03 | Bad |
| Comp. Ex. 5 | 4 rows × 4 rows | 2 | 1 | 1 | 0.25 | Fair |
| *Example 5 | 4 rows × 4 rows | 1 | 4 | 2 | 0.90 | Good |
| Example 6 | 4 rows × 4 rows | 1 | 5 | 2 | 0.91 | Good |
| * Example 7 | 4 rows × 4 rows | 2 | 4 | 2 | 0.98 | Good |
| Comp. Ex. 8 | 8 rows × 8 rows | 2 | 1 | 1 | 0.18 | Bad |
| Example 16 | 8 rows × 8 rows | 2 | 12 | 3 | 0.93 | Good |
| Example 17 | 8 rows × 8 rows | 2 | 12* | 2 | 0.37 | Fair |
| Example 23 | 8 rows × 8 rows | 2 | 16 | 3 | 0.91 | Good |
| Example 24 | 8 rows × 8 rows | 2 | 16* | 2 | 0.41 | Fair |

| | | | | | | |
|---|---|---|---|---|---|---|
| In 12* and 16*, the step 1 was omitted. * denotes a reference example. | | | | | | |

### (Results of thermal resistance evaluation)

From Table 2, while Examples 5 to 7 showed good results, Comparative Example 2 was evaluated as bad, having a problem in the thermal shock resistance property. Comparative Example 5 was evaluated as fair, where a minimal crack was found. Among the bonded articles of 8 rows × 8 rows, while Examples 16 and 23 were evaluated as good, Comparative Example 8 was evaluated as bad, having a problem in the thermal shock resistance property. Examples 17 and 24 were evaluated as fair, each having a minimal crack. Since Examples 17 and 24 employed a medium-sized block of 4 rows × 4 rows, the strength ratio of the minimum strength to the maximum strength was about 0.4, which is small in comparison with 0.9 or more of Examples 16 and 23. Therefore, thermal shock resistance was decreased. However, it can be confirmed that the thermal shock resistance was improved in comparison with Comparative Example 8.

In producing a bonded article, it is ideal that drying and hardening of a bonding material and formation of a bonding material layer are caused at the same time in each bonding position. However, in the case of a large bonded article (bonding many honeycomb segments), in a bonded article obtained by applying a bonding material on a face to be bonded of a honeycomb segment, repeating bonding with pressurizing honeycomb segments one by one to bond the honeycomb segments into the final shape in one bonding step, and then drying as the Comparative Examples, there is a difference in a drying manner between the inside and the outside, and behaviors of drying shrinkage and hardening of the bonding material in accordance with the drying are different. For example, since the movement manner of the honeycomb segments in accordance with the drying shrinkage and hardening of the bonding material is not uniform at this time, a variance is caused in the manner of formation of the bonding material layer, and the properties also have variances.

For example, hardening is performed with honeycomb segments moving in the direction where the bonding gap is reduced in accordance with shrinkage of the bonding material in a certain position, while hardening is performed without movement which meets the shrinkage of the bonding material because one side of a honeycomb segment is already in a hardened condition in another position, or a honeycomb segment moves in a direction where the bonding gap increases. Thus, variances are caused in the texture and the properties of the bonding material layer. In the present invention, in order to solve such a problem, at least one small block bonded article where drying conditions are equivalent in each bonding position is produced and dried for solidification in advance before the whole is integrated, and then bonding and drying are performed for integration into a shape by which drying conditions are equivalent in each bonding position upon bonding the whole parts. For example, by the bonding structure, the movement of the honeycomb segments or small block bonded article(s) in accordance with drying shrinkage and hardening of the bonding material is uniformalized to reduce a variance in a formation manner of the bonding material layer and a variance in properties.

### Industrial Applicability

A method of producing a honeycomb segment of the present invention is useful as a trapping filter for exhaust gas, for example, as a production method of a diesel particulate filter (DPF) for trapping and removing particulate matter (particulates) contained in exhaust gas from diesel engine or the like.

## Claims

1. A method of producing a honeycomb segment bonded article (1), the method comprising:
(A) producing plural preliminary blocks (13, 14) by unitarily bonding a plurality of honeycomb segments (10) having a plurality of cells (3) being partitioned by partition walls (2) and passing through in the axial direction with a bonding material (5) at a bonding face of each of the honeycomb segments (10) and drying the honeycomb segments (10), and
(B) integrally bonding said plural preliminary blocks (13, 14) together.

2. The method of producing a honeycomb segment bonded article (1) according to Claim 1, wherein, in a preliminary block (13, 14) formed in step (A), the honeycomb segments (10) are arranged in 5 rows or less along each of a first side and a second side perpendicular to the first side in a cross section in an axial direction to form an arrangement of 5 rows or less times 5 rows or less.

3. The method of producing a honeycomb segment bonded article (1) according to Claim 1 or 2, wherein, in a preliminary block (13, 14) formed in step (A), no or one honeycomb segment (10) is surrounded by the bonding layer formed of the bonding material (5) at all outer peripheral walls.

4. The method of producing a honeycomb segment bonded article (1) according to any one of claims 1 to 3, wherein, in a preliminary block (13, 14) formed in step (A), the honeycomb segments (10) are arranged in 2 rows or less on the first side and 2 rows or more on the second side perpendicular to the first side in a cross section in the axial direction.

5. The method of producing a honeycomb segment bonded article (1) according to any one of claims 1 to 3, wherein, in a preliminary block (13, 14) formed in step (A), the honeycomb segments (10) are arranged in 3 rows on the first side and 3 rows on the second side perpendicular to the first side in a cross section in the axial direction to form an arrangement of 3 rows times 3 rows.

6. The method of producing a honeycomb segment bonded article (1) according to any one of claims 1 to 5, including the further step, after step (B), of drying the bonded article (1) prepared in step (B) and thereafter either bonding thereto a further preliminary block (13, 14) prepared in accordance with step (A) or bonding thereto a honeycomb segment (10).

7. The method of producing a honeycomb segment bonded article (1) according to any one of claims 1 to 6, wherein, in the honeycomb segment bonded article (1), the same number of the honeycomb segments (10) are arranged on the first side and the second side perpendicular to the first side in a cross section in the axial direction.

8. The method of producing a honeycomb segment bonded article (1) according to any one of claims 1 to 7, wherein the method comprises integrally bonding honeycomb segments (10) of one layer on part of the outer peripheral face of the preliminary block (13, 14).

9. The method of producing a honeycomb segment bonded article (1) according to any one of claims 1 to 7, wherein the method comprises integrally bonding honeycomb segments (10) of one layer on the outer peripheral face of the preliminary block (13, 14) more than once.

## Patentansprüche

1. Verfahren zur Herstellung eines Wabensegmentverbundgegenstands (1), wobei das Verfahren Folgendes umfasst:
(A) die Herstellung einer Vielzahl von Vorelementen (13, 14) durch das haftschlüssige Verbinden einer Vielzahl von Wabensegmenten (10), die eine Vielzahl an Zellen (3) aufweisen, die durch Trennwände (2) getrennt sind und in axialer Richtung verlaufen, mit einem Haftmittel (5) an Haftflächen jedes Wabensegments (10) zu einem Stück und das Trocknen der Wabensegmente (10) und
(B) das haftschlüssige Verbinden der Vielzahl an Vorelementen (13, 14) zu einem Stück.

2. Verfahren zur Herstellung eines Wabensegmentverbundgegenstands (1) nach Anspruch 1, worin die Wabensegmente (10) in einem in Schritt (A) ausgebildeten Vorelement (13, 14)jeweils entlang einer ersten Seite und einer zweiten Seite, die in einem Querschnitt in axialer Richtung im rechten Winkel auf die erste Seite steht, in fünf oder weniger Reihen angeordnet werden, um eine Anordnung von fünf oder weniger Reihen mal fünf oder weniger Reihen zu bilden.

3. Verfahren zur Herstellung eines Wabensegmentverbundgegenstands (1) nach Anspruch 1 oder 2, worin kein oder ein Wabensegment (10) in einem in Schritt (A) ausgebildeten Vorelement (13, 14) durch die aus dem Haftmittel (5) gebildete Haftschicht an allen Außenumfangsseiten umgeben ist.

4. Verfahren zur Herstellung eines Wabensegmentverbundgegenstands (1) nach einem der Ansprüche 1 bis 3, worin die Wabensegmente (10) in einem in Schritt (A) ausgebildeten Vorelement (13, 14) in zwei oder weniger Reihen auf der ersten Seite und zwei oder mehr Reihen auf der zweiten Seite angeordnet werden, die in einem Querschnitt in axialer Richtung im rechten Winkel auf die erste Seite steht.

5. Verfahren zur Herstellung eines Wabensegmentverbundgegenstands (1) nach einem der Ansprüche 1 bis 3, worin die Wabensegmente (10) in einem in Schritt (A) ausgebildeten Vorelement (13, 14) in drei Reihen auf der ersten Seite und drei Reihen auf der zweiten Seite angeordnet werden, die in einem Querschnitt in axialer Richtung im rechten Winkel auf die erste Seite steht, um eine Anordnung mit drei Reihen mal drei Reihen zu bilden.

6. Verfahren zur Herstellung eines Wabensegmentverbundgegenstands (1) nach einem der Ansprüche 1 bis 5, das nach Schritt (B) den weiteren Schritt des Trocknens des in Schritt (B) hergestellten Verbundgegenstands (1) umfasst, wonach entweder ein weiteres Vorelement (13, 14), das gemäß Schritt (A) hergestellt wurde, oder ein Wabensegment (10) mit diesem haftschlüssig verbunden wird.

7. Verfahren zur Herstellung eines Wabensegmentverbundgegenstands (1) nach einem der Ansprüche 1 bis 6, worin in dem Wabensegmentverbundgegenstand (1) dieselbe Anzahl an Wabensegmenten (10) auf der ersten Seite und auf der zweiten Seite angeordnet wird, wobei die zweite Seite in einem Querschnitt in axialer Richtung im rechten Winkel auf die erste Seite steht.

8. Verfahren zur Herstellung eines Wabensegmentverbundgegenstands (1) nach einem der Ansprüche 1 bis 7, worin das Verfahren das einstückige haftschlüssige Verbinden von einschichtigen Wabensegmenten (10) mit dem Vorelement (13, 14) auf einem Teil seiner Außenumfangsfläche umfasst.

9. Verfahren zur Herstellung eines Wabensegmentverbundgegenstands (1) nach einem der Ansprüche 1 bis 7, worin das Verfahren mehr als ein Mal das einstückige haftschlüssige Verbinden von einschichtigen Wabensegmenten (10) mit dem Vorelement (13, 14) auf einem Teil seiner Außenumfangsfläche umfasst.

## Revendications

1. Procédé de fabrication d'un article à segments de nid d'abeilles liés (1), le procédé comprenant :
(A) la fabrication de plusieurs blocs préliminaires (13, 14) en liant unitairement une pluralité de segments de nid d'abeilles (10) ayant une pluralité de cellules (3) qui sont séparées par des parois de séparation (2) et traversant dans la direction axiale avec un matériau de liaison (5) au niveau d'une face de liaison de chacun des segments de nid d'abeilles (10) et le séchage des segments de nid d'abeilles (10), et
(B) la liaison d'un seul tenant de ladite pluralité de blocs préliminaires (13, 14) les uns aux autres.

2. Procédé de fabrication d'un article à segments de nid d'abeilles liés (1) selon la revendication 1, dans lequel, dans un bloc préliminaire (13, 14) formé à l'étape (A), les segments de nid d'abeilles (10) sont agencés en 5 rangées ou moins le long de chacun d'un premier côté et d'un deuxième côté perpendiculaire au premier côté en coupe transversale dans une direction axiale pour former un agencement de 5 rangées ou moins sur 5 rangées ou moins.

3. Procédé de fabrication d'un article à segments de nid d'abeilles liés (1) selon la revendication 1 ou 2, dans lequel, dans un bloc préliminaire (13, 14) formé à l'étape (A), aucun ou un segment de nid d'abeilles (10) est entouré par la couche de liaison constituée du matériau de liaison (5) au niveau de toutes les parois périphériques extérieures.

4. Procédé de fabrication d'un article à segments de nid d'abeilles liés (1) selon l'une quelconque des revendications 1 à 3, dans lequel, dans un bloc préliminaire (13, 14) formé à l'étape (A), les segments de nid d'abeilles (10) sont agencés en 2 rangées ou moins sur le premier côté et 2 rangées ou plus sur le deuxième côté perpendiculaire au premier côté en coupe transversale dans la direction axiale.

5. Procédé de fabrication d'un article à segments de nid d'abeilles liés (1) selon l'une quelconque des revendications 1 à 3, dans lequel, dans un bloc préliminaire (13, 14) formé à l'étape (A), les segments de nid d'abeilles (10) sont agencés en 3 rangées sur le premier côté et 3 rangées sur le deuxième côté perpendiculaire au premier côté en coupe transversale dans la direction axiale pour former un agencement de 3 rangées sur 3 rangées.

6. Procédé de fabrication d'un article à segments de nid d'abeilles liés (1) selon l'une quelconque des revendications 1 à 5, comprenant l'étape supplémentaire, après l'étape (B), de séchage de l'article lié (1) préparé à l'étape (B) et ensuite soit de liaison à celui-ci d'un autre bloc préliminaire (13, 14) préparé selon l'étape (A), soit de liaison à celui-ci d'un segment de nid d'abeilles (10).

7. Procédé de fabrication d'un article à segments de nid d'abeilles liés (1) selon l'une quelconque des revendications 1 à 6, dans lequel, dans l'article lié de segments de nid d'abeilles (1), le même nombre de segments de nid d'abeilles (10) sont agencés sur le premier côté et le deuxième côté perpendiculaire au premier côté en coupe transversale dans la direction axiale.

8. Procédé de fabrication d'un article à segments de nid d'abeilles liés (1) selon l'une quelconque des revendications 1 à 7, dans lequel le procédé comprend la liaison d'un seul tenant des segments de nid d'abeilles (10) d'une couche sur une partie de la face périphérique extérieure du bloc préliminaire (13, 14).

9. Procédé de fabrication d'un article à segments de nid d'abeilles liés (1) selon l'une quelconque des revendications 1 à 7, dans lequel le procédé comprend la liaison d'un seul tenant des segments de nid d'abeille (10) d'une couche sur la face périphérique extérieure du bloc préliminaire (13, 14) plusieurs fois.
